Europäisches Patentamt

European Patent Office

Office européen des brevets

(19)

(11) Numéro de publication : **0 509 929 B1**

(12) **FASCICULE DE BREVET EUROPEEN**

(45) Date de publication du fascicule du brevet :
**08.06.94 Bulletin 94/23**

(51) Int. Cl.⁵ : **B01J 19/32, F25J 3/00**

(21) Numéro de dépôt : **92401075.4**

(22) Date de dépôt : **17.04.92**

(54) **Procédé de séparation cryogénique de mélanges contenant de l'oxygène, garnissage organisé pour la mise en oeuvre de ce procédé, et colonne de distillation d'air comportant un tel garnissage.**

(30) Priorité : **19.04.91 FR 9104844**

(43) Date de publication de la demande :
**21.10.92 Bulletin 92/43**

(45) Mention de la délivrance du brevet :
**08.06.94 Bulletin 94/23**

(84) Etats contractants désignés :
**DE FR GB**

(56) Documents cités :
**EP-A- 0 337 150**
**EP-A- 0 341 854**
**EP-A- 0 447 943**
**CHEMICAL ENGINEERING PROGRESS vol. 86, no. 1, Janvier 1990, NEW YORK, US pages19 - 29; J.R.FAIR ET AL.: 'DISTILLATION COLUMNS CONTAINING STRUCTURED PACKING'**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Lehman, Jean-Yves**
**27 Domaine Château Gaillard**
**F-94700 Maisons Alfort (FR)**
Inventeur : **Colin, Jean-Claude**
**54 rue Boileau**
**F-91330 Yerres (FR)**

(74) Mandataire : **Le Moenner, Gabriel et al**
**L'AIR LIQUIDE, Société Anonyme**
**pour l'étude et l'exploitation des procédés**
**Georges Claude**
**75, Quai d'Orsay**
**F-75321 Paris Cédex 07 (FR)**

EP 0 509 929 B1

Jouve, 18, rue Saint-Denis, 75001 PARIS

# Description

La présente invention concerne les procédés de séparation cryogénique de mélanges contenant de l'oxygène pour l'obtention de produit à forte concentration en oxygène, comprenant l'étape d'effectuer un échange de chaleur et de matière à contre-courant entre un liquide descendant et un gaz ascendant dans au moins une zone de transfert comportant un paquet de garnissages organisés constitués de nappes métalliques ondulées-croisées.

Un procédé et des garnissages organisés de ce type sont décrits dans le document WO-A-89/10527, au nom de la Demanderesse, dont le contenu est supposé intégré ici pour référence.

Dans les procédés classiques de ce type, notamment pour la distillation de l'air, les nappes métalliques de garnissage sont constituées à partir de feuillards d'une épaisseur de 0,2 mm et présentent une surface spécifique d'environ 500 m²/m³, le métal étant de l'acier inoxydable, de l'aluminium ou du cuivre. (cf. introduction de la présentation au 1990 AlChE Loss Prevention Symposium d'août 1990 à San Diego par MM. Dunbobbin, Werley and Hansel).

Dans la pratique, en raison de son coût et de ses performances, l'aluminium est le meilleur matériau dans la plupart des applications de séparation cryogénique. Toutefois, dans les zones à haute pureté en oxygène (supérieure à 98 %), notamment à pression élevée, l'aluminium peut présenter des risques d'inflammation dans des garnissages de ce type.

C'est pourquoi il a été préconisé (cf. la présentation susmentionnée) de ne recourir qu'à des garnissages en cuivre, malgré l'augmentation importante de coûts afférente.

La présente invention a pour objet de proposer un procédé de séparation cryogénique permettant d'utiliser des garnissages en aluminium même dans les zones à très forte concentration en oxygène et sous pression élevée en éliminant les risques d'inflammation et en permettant de conserver des coûts de fabrication réduits.

A cet effet, selon une caractéristique de l'invention, au moins dans une zone de transfert où la concentration en oxygène est supérieure à 98 %, les nappes sont réalisées en feuillard d'aluminium d'épaisseur comprise entre 0,3 et 1 mm, le paquet de nappes présentant une surface spécifique inférieure à 400 m²/m³, typiquement comprise entre 100 m²/m³ et 300 m²/m³.

Selon une caractérique plus particulière de l'invention, les nappes sont mises en forme avec un pas d'ondulation supérieur à 7 mm, typiquement de l'ordre de 10 mm, et ont contrairement aux nappes de garnissage habituelles, une densité de perforation inférieure à 10 perforations par m², en pratique sensiblement exemptes de perforations.

Selon une autre caractéristique de l'invention, le paquet de nappes est soumis à une étape d'oxydation superficielle soit de type anodique, soit avec formation d'oxyde par trempage à l'eau ou sous une atmosphère oxydante contenant de la vapeur d'eau, typiquement à une température entre 60 et 200°C, pendant au moins une heure.

La présente invention a également pour objet un garnissage organisé pour la mise en oeuvre de ce procédé, caractérisé en ce qu'il est constitué de nappes de feuillards d'aluminium ayant une épaisseur contrôlée entre 0,3 et 1 mm et présentant un pas d'ondulation supérieur à 7 mm, typiquement d'environ 10 mm, et sensiblement exempt de perforations.

Les nappes métalliques des garnissages organisés connus sont réalisées avec des irrégularités de surface, telles qu'un gaufrage ou plus généralement des stries, pour favoriser l'étalement du liquide, avec la conséquence d'augmenter l'importance du film d'oxygène liquide présent sur la surface du garnissage, et donc de se rapprocher des proportions stoechiométriques.

La présente invention a pour autre objet de proposer des perfectionnements aux garnissages organisés visant à réduire le rapport des quantités d'oxygène liquide par rapport à la quantité stoechiométrique pour éliminer encore plus radicalement les risques d'inflammation.

Pour ce faire, selon une caractéristique de l'invention, le feuillard présente des surfaces lisses, typiquement une variation d'épaisseur n'excédant pas plus ou moins un centième de millimètre, avantageusement de l'ordre de 5 millièmes de millimètre.

Les mesures selon l'invention permettent, par le choix de l'épaisseur du feuillard et de son traitement de surface, d'augmenter l'inertie thermique et de limiter ainsi la possibilité de propagation d'un feu éventuel. La diminution de la surface spécifique permet de diminuer l'adiabaticité de la structure de garnissage en diluant la chaleur dégagée par l'inflammation d'une impureté organique et une combustion locale résultante du matériau. La réduction considérable de perforations, voire leur disparition, permet d'augmenter le confinement dans la structure de garnissage de manière à conserver les gaz d'une éventuelle combustion à l'endroit de cette dernière. Enfin, l'oxydation superficielle des feuillards limite considérablement les risques d'inflammation.

Ces mesures permettent d'étendre le domaine des garnissages en aluminium vers les hautes puretés en oxygène et les fortes pressions avec une excellente sécurité et à un coût demeurant limité.

D'autres caractéristiques et avantages de la présente invention ressortiront de la description suivante d'un mode de réalisation, donné à titre illustratif mais nullement limitatif, faite en relation avec les dessins annexés, sur lesquels :

- la figure 1 représente schématiquement une colonne de distillation d'air équipée de garnissages ondulés-croisés selon l'invention ; et
- la figure 2 est une vue schématique en coupe d'une nappe de garnissage selon l'invention.

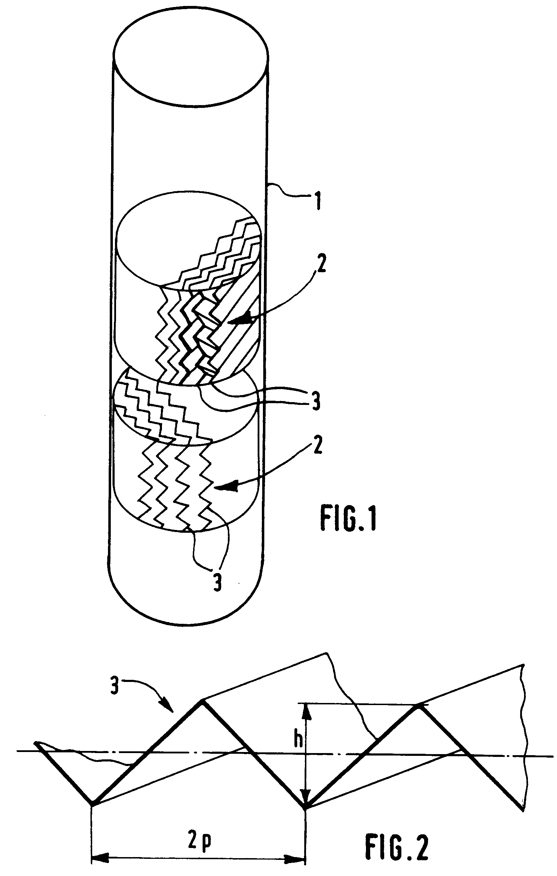

Comme représenté sur la figure 1, une colonne de distillation d'air 1 comporte au moins un paquet de garnissages 2 constitué chacun d'un assemblage croisé de nappes 3 ondulées en oblique, les ondes ayant typiquement un profil triangulaire, comme on le voit sur la figure 2. Le sens d'inclinaison des ondes est inversé d'une nappe à la suivante. Toutes les nappes d'un même élément sont disposés dans des plans verticaux parallèles. Les garnissages 2 constituent des dispositifs d'échange de chaleur et de matière à contre-courant entre un liquide descendant et un gaz ascendant dans la colonne, au bas de laquelle un liquide riche en oxygène est typiquement recueilli, un mélange de gaz appauvri en oxygène étant récupéré en tête de colonne.

Conformément à l'invention, les nappes 3 sont réalisées par découpe et mise en forme de feuillards en aluminium d'épaisseur contrôlée comprise entre 0,3 et 1 mm, typiquement d'environ 0,5 mm, les variations d'épaisseur n'excédant pas plus ou moins un centième de millimètre. Les ondulations ont un pas p supérieur à 7 mm, typiquement de l'ordre de 10 mm et une hauteur d'ondulation h supérieure à 7 mm, typiquement de l'ordre de 10 mm. Chaque nappe est sensiblement exempte de perforations, le nombre de perforations n'excédant pas 10 perforations par m² de nappe. Les garnissages réalisés par assemblage de telles nappes présentent une surface spécifique inférieure à 400 m²/m³, typiquement comprise entre 100 m²/m³ et 300 m²/m³ selon les conditions de pureté et de pression.

Selon un aspect de l'invention, chaque nappe préformée est soumise, avant montage, à une étape de dégraissage et de nettoyage par l'immersion ou vaporisation avec une composition nettoyante ou un solvant, puis séchée (à l'air sec, éventuellement chauffé à une température inférieure à 100°C), afin d'éliminer les éventuels dépôts organiques.

Selon un autre aspect de l'invention, le feuillard lisse est laissé dans l'état résultant du laminage, en subissant éventuellement une opération ultérieure de polissage à froid.

L'épaisseur du film ruisselant, en régime établi, sur une plaque inclinée est établie par l'équation suivante :

$$y = [3\mu.q./\rho.g.L. \cos \theta]^{1/3},$$

où $\mu$ est la viscosité dynamique, q le débit volumique de liquide, $\rho$ la masse volumique de liquide, g l'accélération de la pesanteur, L la largeur de la plaque (double face) et $\theta$ l'angle de la plaque avec la verticale.

Pour un garnissage classique ayant une surface spécifique de 500 m²/m³, avec $\mu$ = 15 x 10⁻⁵ daP, q = 4x10⁻³ m³/s et L = 500 mètres (pour une colonne de 1 m² de section), $\rho$ = 1135 kg/m³ et $\theta$ = 60°, l'épaisseur y du film est égale à 80 microns. Pour un mètre cube de garnissage, on obtient ainsi 80 x 10⁻⁶ x 500 = 0,04 m³ d'oxygène liquide, soit 45,40 kg ou 2837 atomes-grammes d'oxygène, que l'on peut comparer à 0,2 x 10⁻³ x 250 = 0,05 m³ d'aluminium, soit 135 kg ou 5000 atomes-grammes d'aluminium. La proportion stoechiométrique d'oxygène serait 5000 x 3 1/2 = 7500 atomes-grammes. On a donc un rapport à la stoechiométrie de 2837/7500 = 0,38. La surface n'étant pas lisse, mais striée, le régime ne parvient pas à s'établir et l'épaisseur du film d'oxygène qui en résulte est plus élevée, de sorte qu'en fait la quantité d'oxygène liquide stockée sur la surface correspond à un rapport à la stoechiométrie doublé, soit 0,76.

Conformément à l'invention, avec un garnissage de surface spécifique égal à 300 m²/m³, une épaisseur de feuillard d'aluminium de 0,5 mm et un feuillard lisse, le rapport à la quantité stoechiométrique devient 0,18. Avec un garnissage de surface spécifique égal à 200 m²/m³, avec une épaisseur de feuillard d'aluminium de 0,6 mm et un feuillard lisse, le rapport à la quantité stoechiométrique devient 0,10. On comprend qu'avec un agencement selon l'invention les risques d'inflammation deviennent quasiment nuls.

Le procédé et le garnisssage selon l'invention conviennent tout particulièrement pour les zones de colonne de distillation d'air avec des teneurs en oxygène supérieures à 98 %, pouvant atteindre 99,99 %, et/ou sous des pressions locales supérieures à 1,5 x 10⁵ Pa absolus.

**Revendications**

1. Procédé de séparation cryogénique de mélanges contenant de l'oxygène pour l'obtention de produit à forte concentration en oxygène, comprenant l'étape d'effectuer un échange de chaleur et de matière à contre-courant entre un liquide descendant et un gaz ascendant dans au moins une zone de transfert comportant un paquet de garnissages organisés (2) constitué de nappes métalliques ondulées-croisées (3), caractérisé en ce qu'au moins dans une zone de transfert où la concentration en oxygène est supérieure à 98 %, les nappes (3) sont réalisées en feuillard d'aluminium d'épaisseur comprise entre 0,3 et 1 mm, le paquet de nappes présentant une surface spécifique inférieure à 400 m²/m³.

2. Procédé selon la revendication 1, caractérisé en ce que la surface spécifique est comprise entre 100 et 300 m²/m³.

3. Procédé selon la revendication 2, caractérisé en ce que chaque nappe (3) est mise en forme avec un pas d'ondulation (p) supérieur à 7 mm.

4. Procédé selon la revendication 3, caractérisé en ce que chaque nappe (3) est mise en forme avec une hauteur d'ondulation (h) supérieure à 7 mm.

5. Procédé selon l'une des revendications 1 à 4, caractérisé en ce que chaque nappe (3) a une densité de perforations inférieure à 10 perforations par m².

6. Procédé selon l'une des revendications 1 à 5, caractérisé en ce que le paquet (2) est soumis à une étape d'oxydation superficielle.

7. Procédé selon l'une des revendications 1 à 6, caractérisé en ce que chaque nappe (3) est soumise, avant montage, à une étape de nettoyage.

8. Procédé selon l'une des revendications 1 à 7, caractérisé en ce que la pression dans ladite zone de transfert est supérieure à 1,5 x 10⁵ Pa absolus.

9. Garnissage organisé pour la mise en oeuvre du procédé selon l'une des revendications précédentes, caractérisé en ce qu'il est constitué d'un assemblage de nappes en feuillard d'aluminium ayant une épaisseur entre 0,3 et 1 mm présentant un pas d'ondulation d'environ 10 mm, et présentant une surface spécifique inférieure à 400 m²/m³.

10. Garnissage selon la revendication 9, caractérisé en ce que les nappes (3) sont sensiblement exemptes de perforations.

11. Garnissage selon la revendication 9 ou la revendication 10, caractérisé en ce que le feuillard présente des surfaces lisses.

12. Garnissage selon la revendication 11, caractérisé en ce que le feuillard présente une variation d'épaisseur n'excédant pas plus ou moins 1/100ème de mm.

13. Garnissage selon la revendication 12, caractérisé en ce que le feuillard a une variation d'épaisseur moyenne d'environ 5 x 1/1000ème de mm.

14. Garnissage selon la revendication 13, caractérisé en ce que le feuillard est soumis, en sortie de laminage, à un polissage.

15. Colonne de distillation d'air, caractérisée en ce qu'elle comporte au moins un paquet de garnissages selon l'une des revendications 9 à 14.

**Patentansprüche**

1. Verfahren zum kryogenen Zerlegen von Sauerstoff enthaltenden Gemischen zur Gewinnung eines Erzeugnisses hoher Sauerstoffkonzentration, umfassend den Schritt: Durchführen eines Gegenstromwärme- und -materialaustausches zwischen einer absteigenden Flüssigkeit und einem aufsteigenden Gas in zumindest einer Übertragungszone, die ein Paket strukturierter Packungen (2) umfaßt, das aus gewellten, sich kreuzenden Metallamellen (3) besteht, dadurch gekennzeichnet, daß zumindest in einer Übertragungszone, in der die Sauerstoffkonzentration höher als 98% ist, die Lamellen (3) aus einem Aluminiumbandmaterial einer Stärke von zwischen 0,3 und 1 mm bestehen, wobei das Lamellenpaket eine spezifische Oberfläche von weniger als 400 m²/m³ aufweist.

2. Verfahren nach Anspruch 1, dadurch gekennzeichnet, daß die spezifische Oberfläche zwischen 100 und 300 m²/m³ beträgt.

3. Verfahren nach Anspruch 2, dadurch gekennzeichnet, daß jede Lamelle (3) mit einer Wellenperiode ($\underline{p}$) größer als 7 mm ausgebildet ist.

4. Verfahren nach Anspruch 3, dadurch gekennzeichnet, daß jede Lamelle (3) mit einer Wellenamplitude (h) größer als 7 mm ausgebildet ist.

5. Verfahren nach einem der Ansprüche 1 bis 4, dadurch gekennzeichnet, daß jede Lamelle (3) eine Perforationsdichte von weniger als 10 Perforationen pro m² aufweist.

6. Verfahren nach einem der Ansprüche 1 bis 5, dadurch gekennzeichnet, daß das Paket (2) einem künstlichen Oxidationsschritt unterworfen wird.

7. Verfahren nach einem der Ansprüche 1 bis 6, dadurch gekennzeichnet, daß jede Lamelle (3) vor der Montage einem Trocknungsschritt unterworten wird.

8. Verfahren nach einem der Ansprüche 1 bis 7, dadurch gekennzeichnet, daß der Druck in der Übertragungszone höher als 1,5 x 10⁵ Pa absolut ist.

9. Strukturierte Packung zur Durchführung des Verfahrens nach einem der vorangehenden Ansprüche, dadurch gekennzeichnet, daß sie aus einem Lamellenaufbau aus Aluminiumbandmaterial besteht, das eine Stärke von zwischen 0,3 und einem 1 mm, eine Wellenperiode von etwa 10 mm und eine spezifische Oberfläche von weniger als 400 m²/m³ aufweist.

10. Packung nach Anspruch 9, dadurch gekennzeichnet, daß die Lamellen (3) im wesentlichen perforationsfrei sind.

11. Packung nach Anspruch 9 oder Anspruch 10, dadurch gekennzeichnet, daß das Bandmaterial glatte Oberflächen aufweist.

12. Packung nach Anspruch 11, dadurch gekennzeichnet, daß das Bandmaterial eine Dickenschwankung aufweist, die plus oder minus 1/100 mm nicht übersteigt.

13. Packung nach Anspruch 12, dadurch gekennzeichnet, daß das Bandmaterial eine mittlere Dickenschwankung von etwa 5 x 1/1000 mm aufweist.

14. Packung nach Anspruch 13, dadurch gekennzeichnet, daß das Bandmaterial nach dem Walzen einem Poliervorgang unterworfen wird.

15. Luftdestillationssäule, dadurch gekennzeichnet, daß sie wenigstens ein Packungspaket gemäß einem der Ansprüche 9 bis 14 umfaßt.

## Claims

1. Process for the cryogenic separation of mixtures containing oxygen in order to obtain product having a high oxygen concentration, comprising the step of carrying out a countercurrent heat and matter exchange, between a descending liquid and an ascending gas, in at least one transfer zone which includes a packet (2) of organized packing elements, this packet consisting of crossed, undulated metal sheets (3), characterized in that, at least in a transfer zone where the oxygen concentration is greater than 98%, the sheets (3) are made from aluminium strip of thickness lying between 0.3 and 1 mm, the packet of sheets having a specific surface area less than 400 m²/m³.

2. Process according to Claim 1, characterized in that the specific surface area lies between 100 and 300 m²/m³.

3. Process according to Claim 2, characterized in that each sheet (3) is made into a shape with an undulation pitch (p) greater than 7 mm.

4. Process according to Claim 3, characterized in that each sheet (3) is made into a shape with an undulation height (h) greater than 7 mm.

5. Process according to one of Claims 1 to 4, characterized in that each sheet (3) has a density of perforations less than 10 perforations per m².

6. Process according to one of Claims 1 to 5, characterized in that the packet (2) is subjected to a surface oxidation step.

7. Process according to one of Claims 1 to 6, characterized in that each sheet (3) is subjected, before mounting, to a cleaning step.

8. Process according to one of Claims 1 to 7, characterized in that the pressure in the said transfer zone is greater than $1.5 \times 10^5$ Pa absolute.

9. Organized packing element for the implementation of the process according to one of the preceding claims, characterized in that it consists of an assembly of aluminium-strip sheets having a thickness between 0.3 and 1 mm, having an undulation pitch of approximately 10 mm and having a specific surface area less than 400 m²/m³.

10. Packing element according to Claim 9, characterized in that the sheets (3) are substantially free of perforations.

11. Packing element according to Claim 9 or Claim 10, characterized in that the strip has smooth surfaces.

12. Packing element according to Claim 11, characterized in that the strip has a thickness variation not exceeding plus or minus 1/100 th of one mm.

13. Packing element according to Claim 12, characterized in that the strip has a mean thickness variation of approximately $5 \times 1/1000$ th of one mm.

14. Packing element according to Claim 13, characterized in that the strip is subjected, after leaving rolling, to polishing.

15. Air-distillation column, characterized in that it includes at least one packet of packing elements according to one of Claims 9 to 14.

FIG.1

FIG.2